# FASCICULE DE BREVET EUROPEEN

(11) **EP 1 693 551 B1**
(45) Date de publication et mention de la délivrance du brevet: **15.12.2010**
(21) Numéro de dépôt: 06075150.0
(22) Date de dépôt: 25.01.2006
(51) Int. Cl.: F01D 5/30, F04D 29/34

(54) **Dispositif de positionnement d'une aube et disque aubage comportant un tel dispositif**
Vorrichtung zur Positionierung einer Rotorschaufel und beschaufelte Rotorscheibe mit einer solchen Vorrichtung
Blade positioning device and bladed disk containing such device

(30) Priorité: 27.01.2005 FR 0500837
(43) Date de publication de la demande: 23.08.2006
(73) Titulaire: SNECMA, 75015 Paris (FR)
(72) Inventeur: Corbin, Claude, 77950 Voisenon (FR); Lefebvre, Eric, 89340 Champigny (FR)
(74) Mandataire: Boura, Olivier

(56) Documents cités:
- GB-A- 2 262 139
- US-A- 3 572 970
- US-A- 4 265 595
- US-A- 5 123 813
- US-A1- 2001 007 633
- US-B1- 6 457 942

## Description

L'invention concerne un dispositif de positionnement du pied des aubes d'un turboréacteur, par exemple des aubes de soufflante. Elle concerne plus précisément une cale destinée à positionner correctement le pied des aubes dans leur logement, aménagé en périphérie d'un disque de rotor.

Dans un turboréacteur, les aubes, composées d'un pied et d'une pale définie par deux flancs appelés respectivement intrados et extrados, sont montées dans des logements en forme de gorge, appelés alvéoles, aménagés spécialement à la périphérie des disques de rotor. Ces alvéoles peuvent être droites ou curvilignes. Les aubes sont montées avec un jeu entre leur pied et les parois des alvéoles. Pour le bon fonctionnement du turboréacteur, les pieds d'aubes et les alvéoles du disque doivent être en contact dans l'ensemble du domaine de rotation du moteur. Les surfaces de contact entre les pieds d'aubes et les alvéoles sont appelées portées. Le jeu entre le fond des alvéoles et l'extrémité des pieds d'aubes doit être rattrapé pour garantir le bon positionnement des pieds d'aubes sur les portées du disque. De plus, ce contact permet de limiter le basculement des aubes dans leurs alvéoles et, dans certains cas de dysfonctionnement, par exemple en cas d'impact suite à l'ingestion d'un corps étranger ou en cas de perte d'une aube, de limiter aussi le risque d'usure par frottement ou d'autres détériorations possibles des portées des aubes ou du disque.

De façon connue et comme décrit notamment dans les documents US 4 265 595, US 5 123 813, US 2001/007633, GB 2 262 139, US 6 457 942 et US 3 572 970, le positionnement et le maintien en place des aubes est assuré par des cales glissées dans les alvéoles, sous chaque pied d'aube.

Dans le cas de la perte d'une aube, l'aube cassée vient impacter l'aube adjacente, qui doit pouvoir basculer autour de son pied afin de libérer un angle à son sommet pour que l'aube cassée glisse entre le sommet de l'aube adjacente et le carter situé autour de l'ensemble composé du disque de rotor et des aubes. Les cales doivent donc, sous l'effet de l'effort élevé résultant de l'impact de l'aube cassée sur l'aube adjacente, autoriser le pivotement de cette dernière dans l'alvéole du disque. Ce pivotement doit également être maîtrisé en cas d'impact lié à l'ingestion d'un corps étranger par le turboréacteur, qu'il y ait rupture d'une aube ou non.

Le brevet FR 2 841 609 décrit une cale bi-matériau, composée d'une partie métallique et d'une partie en élastomère. Ce type de cale permet le rattrapage du jeu existant entre les pieds d'aube et les portées des alvéoles. Il permet aussi d'amortir les vibrations et autorise une légère rotation du pied dans l'alvéole en cas de rupture d'une aube voisine, tout en absorbant une partie de l'énergie d'impact. Un premier inconvénient de cette solution est que la mise en place de la cale sous le pied d'aube ainsi que son démontage sont difficiles à cause du coefficient d'adhérence des élastomères. Par ailleurs, au cours du temps, les élastomères ont tendance à se tasser ce qui entraîne une dégradation de la qualité du rattrapage du jeu entre les pieds d'aubes et les portées des alvéoles et une augmentation du risque d'usure par frottement au niveau des portées des aubes et du disque.

Le document EP 0 699 824 décrit un dispositif selon le préambule de la revendication 1.

Le but de l'invention est de pallier aux inconvénients des solutions actuelles et de réaliser un dispositif de positionnement du pied des aubes d'un turboréacteur permettant un rattrapage de jeu efficace entre le disque et le pied des aubes quel que soit le régime de rotation du rotor, quel que soit le cas de fonctionnement, c'est à dire même en cas par exemple de perte d'aube, et ce de façon pérenne au cours du temps.

Pour cela, l'invention concerne un dispositif de cale ressort, de forme profilée, pouvant notamment être réalisé en matériau composite. On entend par profilée une forme issue d'une forme de base de section transversale constante sur toute sa longueur. Cette cale profilée permet, grâce à une seule pièce élastique, de positionner correctement les pieds d'aubes dans les alvéoles et de les maintenir en place quel que soit le régime de rotation du rotor. Ce dispositif autorise de plus un basculement du pied d'aube en cas de dysfonctionnement, par exemple en cas d'impact ou de perte d'aube, et assure le retour de l'aube impactée en position initiale.

Selon l'invention, le dispositif de positionnement d'une aube dans une alvéole d'un disque de rotor comprend une cale ressort constituée d'une seule et unique pièce élastique de forme profilée.

La forme profilée de la cale est creuse. Toutefois, elle peut aussi contenir un noyau dans sa partie centrale.

Conformément à l'invention, la cale comporte sur ses parties latérales des usinages.

Préférentiellement, ladite cale comporte à ses extrémités amont et aval respectivement un détrompeur et une languette.

Selon une caractéristique additionnelle de l'invention, ladite cale est élaborée à partir d'un seul et unique matériau. Avantageusement elle est élaborée à partir d'un matériau composite. Ce matériau composite peut être constitué de fibres de matériau identique ou différents et élaboré à partir de drapé pré-imprégné ou d'une texture de fibres tissées. Mais la cale peut aussi être réalisée à partir d'un matériau métallique.

Alternativement, le détrompeur et la languette sont élaborés à partir d'un matériau différent de celui de ladite cale.

Le détrompeur et la languette peuvent former une pièce monobloc avec ladite cale ou être rapportés et fixés sur la cale.

L'invention concerne également un disque aubagé comportant un disque, au moins une aube dans une alvéole réalisée en périphérie du disque et au moins un dispositif de positionnement de l'aube dans son alvéole.

D'autres particularités ou avantages de l'invention apparaîtront clairement dans la suite de la description donnée à titre d'exemple non limitatif et faite en regard des figures annexées qui représentent :
- figure 1 :une vue en perspective d'une cale selon l'invention en place dans une alvéole de disque, sous un pied d'aube,
- figure 2 : une vue en perspective d'une cale,
- figure 3 : une vue en perspective d'une cale selon un mode de réalisation de l'invention,
- figure 4 : une vue en perspective de la partie aval d'une cale selon l'invention,
- figure 5 : une vue de côté d'un disque aubagé équipé d'une cale selon l'invention,
- figure 6 : une vue de côté d'un disque aubagé équipé d'une cale selon l'invention, en place dans une alvéole de disque, sous un pied d'aube en cas de basculement de l'aube suite à un dysfonctionnement.

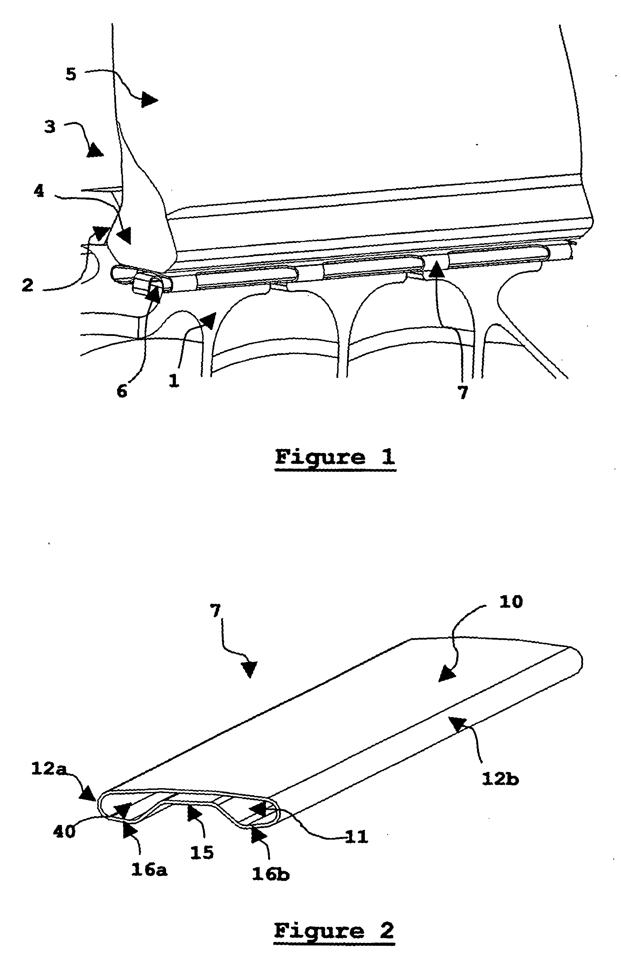

Sur la figure 1 est représenté un disque 1 d'un rotor, par exemple un rotor de soufflante, à la périphérie duquel sont aménagées des alvéoles 2. Ces alvéoles 2 peuvent être droites, curvilignes, ou de toute autre forme. Dans l'exemple donné ici, les alvéoles sont droites et ont une section en queue d'aronde.

Dans chaque alvéole 2 vient se loger une aube 3, comportant un pied 4 et une pale aérodynamique 5. Le pied 4 de l'aube 3, ici en forme de queue d'aronde, est introduit axialement dans l'alvéole 2 correspondante.

Entre le pied 4 de l'aube 3 et le fond 6 de l'alvéole 2 est glissée une cale 7, représentée plus en détail sur les figures 2, 3 et 4. Le montage de la cale 7 s'effectue axialement de l'amont vers l'aval du disque 1, c'est à dire de gauche à droite sur la figure 1.

Par la suite, le terme supérieur, respectivement inférieur, signifiera radialement extérieur, respectivement intérieur.

La cale 7, illustrée sur les figures 2, 3 et 4, est une seule et unique pièce, de forme profilée creuse. Elle comporte une paroi supérieure 10, une paroi inférieure 11 et deux parois latérales 12a et 12b. La partie centrale 40 de la forme profilée peut éventuellement contenir un noyau (non représenté), formant un tout avec la cale 7.

De façon préférentielle, la paroi supérieure 10 est légèrement bombée, le côté convexe étant situé radialement vers l'extérieur, c'est à dire vers le pied 4 de l'aube 3, le côté concave étant situé radialement vers l'intérieur de la cale 7. Son épaisseur peut être constante ou varier suivant des directions axiale et/ou tangentielle. Cette paroi supérieure 10 est directement en contact avec la face inférieure du pied 4 de l'aube 3.

La paroi inférieure 11 comporte une zone centrale 15 et deux zones périphériques 16a et 16b. Les zones périphériques 16a et 16b sont en contact avec le fond 6 de l'alvéole 2 dont elles épousent la forme. La partie centrale 15 est située en retrait vers l'intérieur de la cale 7, c'est à dire que les positions radiales des zones périphériques 16a et 16b d'une part, et de la zone centrale 15 d'autre part sont différentes, la zone centrale étant plus éloignée de l'axe de rotation du disque 1. Cette disposition apporte de la souplesse à l'ensemble de la cale 7 et contribue à son effet ressort. Les épaisseurs respectives des trois zones composant la paroi inférieure 11 peuvent être constantes ou variables.

Le profil général de la paroi inférieure 11, c'est à dire le positionnement des zones 15, 16a et 16b entre elles, est déterminé en fonction de la souplesse globale voulue pour la cale 7. Sur les figures 2, 3 et 4, ce profil est en forme de créneau, mais, selon la souplesse voulue, il pourrait être d'une autre forme, et être par exemple similaire au profil de la paroi supérieure 10. De même, les épaisseurs des parois supérieure 10 et inférieure 11 sont déterminées et optimisées en fonction de la souplesse globale recherchée.

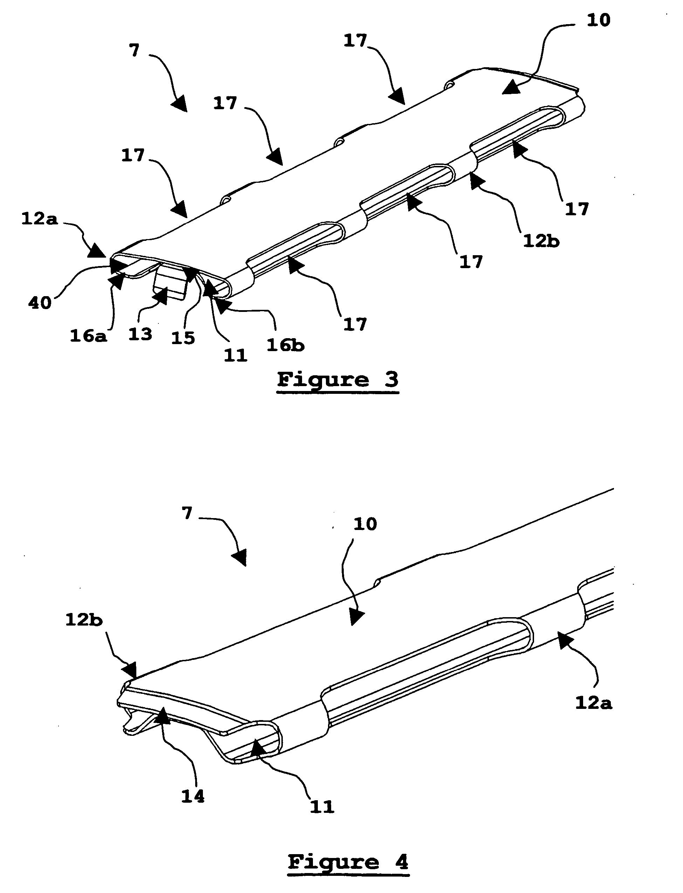

Les deux parois latérales 12a et 12b relient entre elles les parois supérieure 10 et inférieure 11 par une forme arrondie. Elles peuvent être symétriques ou non, d'épaisseurs identiques et constantes sur toute la longueur de la cale ou d'épaisseurs différentes et variables. Des usinages 17, visibles sur les figures 3 et 4, sont réalisés sur les parties 12a et 12b. Ils permettent d'optimiser la souplesse de la cale et d'obtenir un bon compromis entre souplesse, tenue mécanique et masse. Ils permettent le réglage de la souplesse et de la tenue mécanique durant la phase d'optimisation de la cale.

Les parois supérieure 10, inférieure 11 et latérales 12a et 12b de la cale 7 sont de préférence en matériau composite et peuvent être obtenues, par exemple, à partir d'une technique de drapé pré-imprégné. Dans ce cas, les parois sont élaborées à partir d'un empilement de plusieurs plis de tissus, de tout type de fibres, imprégnés de résine organique et positionnés dans un moule autour d'un noyau. Cet ensemble est ensuite mis dans un autoclave pour y subir un cycle de polymérisation. Sous l'effet de la température et de la pression, la résine flue dans les tissus. Les parois de la cale peuvent aussi être obtenues à partir d'une texture préformée de fibres tissées injectées par de la résine en utilisant un procédé connu appelé procédé RTM (Resin Transfer Moulding), comme décrit dans le brevet FR 2759096. Les fibres peuvent être à base d'un seul matériau ou de matériaux différents, par exemple un mélange de fibres en carbone avec des fibres en verre et des fibres en kevlar. Le matériau composite est mis en forme autour d'un ou plusieurs noyaux qui peuvent être retirés, dans le cas de noyaux en silicone ou solubles, ou conservés, dans le cas de noyaux en mousse. Telle que représentée sur les figures 2, 3 et 4, la forme profilée de la cale 7 est aménagée de façon à être réalisable le plus simplement possible dans ce type de matériau. Un avantage des matériaux composites est qu'ils permettent d'obtenir un très bon compromis entre souplesse et tenue mécanique, notamment en jouant sur les épaisseurs, les formes et l'orientation des fibres. Un autre avantage de ce type de matériaux est lié à leur masse volumique, plus faible par exemple que celle d'un matériau métallique, ce qui permet, à iso-géométrie, d'obtenir une pièce plus légère.

Cependant, les parois supérieure 10, inférieure 11 et latérales 12a et 12b de la cale 7 pourraient aussi être obtenues à partir d'un matériau métallique, par exemple à partir d'une tôle pliée et soudée.

A l'amont de la cale 7, c'est à dire à gauche de la figure 1, est aménagé une sorte de languette 13, appelée détrompeur, visible sur la figure 3. Ce détrompeur 13 a deux fonctions. Il permet, lors de la mise en place de la cale 7, d'éviter une erreur de montage en empêchant de monter la cale 7 à l'envers à savoir, soit de monter l'amont de la cale 7 vers l'aval du disque 1, c'est à dire de positionner l'amont de la cale 7 à droite de la figure 1, soit de monter la paroi supérieure 10 de la cale 7 en-dessous, c'est à dire à la place de la paroi inférieure 11. Le détrompeur 13 facilite par ailleurs l'extraction de la cale 7 lors d'une éventuelle opération de démontage.

A l'aval de la cale 7, c'est à dire à droite de la figure 1, est aménagée une seconde languette 14, visible sur la figure 4. Cette languette 14 se situe dans le prolongement de la paroi supérieure 10 de la cale 7. Elle est légèrement inclinée, son extrémité libre étant dirigée radialement vers l'intérieur de la cale 7. Grâce à cette inclinaison, la languette 14 facilite le montage de la cale 7 en la guidant entre le pied 4 de l'aube 3 et le fond 6 de l'alvéole 2.

Le détrompeur 13 et la languette 14 peuvent être réalisés en matériau composite ou métallique. Ils peuvent faire partie intégrante de la cale 7 et former ainsi avec elle une pièce monobloc, ou être rapportés et être par exemple rivetés, collés, noyés, soudés ou brasés.

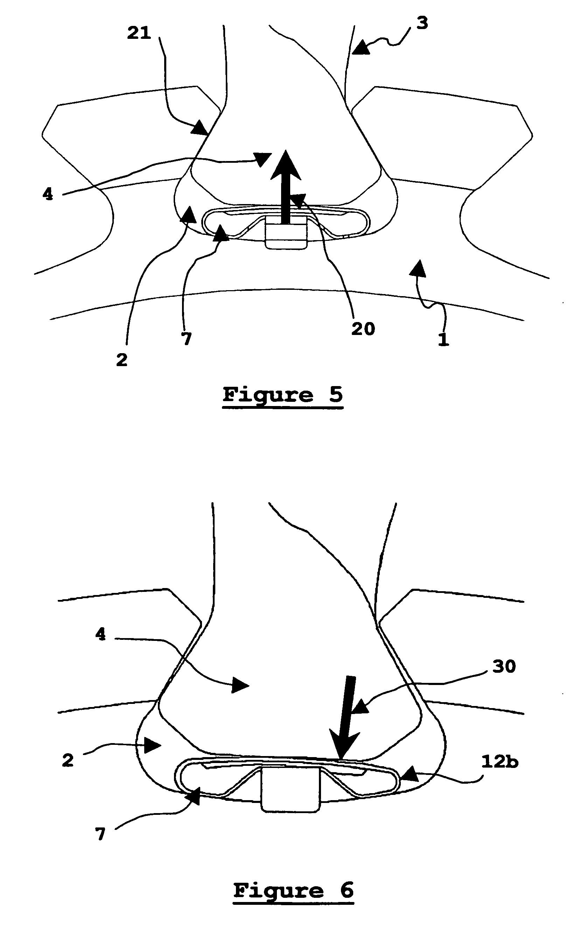

Lors du montage, la cale 7 se déforme. Elle s'aplatit radialement et est ainsi mise en contrainte entre le fond 6 l'alvéole 2 du disque 1 et le pied 4 de l'aube 3. La déformation du profil de la cale 7 lors du montage génère un effort radial, schématisé sur la figure 5 par la flèche 20. Cet effort radial, dirigé du fond de l'alvéole 2 vers la périphérie du disque 1, plaque le pied 4 de l'aube 3 sur les surfaces 21 du disque 1, appelées portées. Ainsi, le jeu existant entre le pied de l'aube 3 et les portées 21 du disque 1 est rattrapé grâce à l'effet ressort de la cale 7. Cet effet ressort associé au fait que le matériau de la cale ne se détériore pas au cours du temps, contrairement aux élastomères par exemple, permet d'assurer un rattrapage de jeu efficace, même après plusieurs heures de rotation du disque 1.

Contrairement à une cale rigide nécessitant pour son montage un jeu entre le pied de l'aube, le disque et la cale, et grâce à son comportement proche de celui d'un ressort, la cale 7 telle que mentionnée est toujours en contact avec le fond 6 de l'alvéole 2 et le pied 4 de l'aube 3. De plus, grâce à la précontrainte de montage, elle épouse toujours la forme de son logement et le jeu entre le pied de l'aube et les parois de l'alvéole est toujours rattrapé. Par ailleurs, grâce à son effet ressort, la cale 7 constitue un excellent amortisseur de vibrations et permet ainsi d'éviter les usures par frottement au niveau des surfaces en contact.
La forme profilée creuse et optimisée de la cale 7 permet par ailleurs de gagner de la masse par rapport notamment à une cale bi-matériau.

La figure 6 illustre le comportement de la cale 7 en cas de perte d'aube. Lors de la rupture d'une aube du disque 1, l'aube cassée vient impacter l'aube voisine, appelée aube adjacente. L'effort créé par cet impact est transmis vers le pied 4 de l'aube adjacente 3 et à la cale 7. L'effort sur la cale 7 résultant de l'impact est schématisé sur la figure 6 par la flèche 30. Sous l'effet de cet effort, le côté de la cale 7 où il s'applique, c'est à dire le côté de la paroi latérale 12b, est comprimé. La cale 7 étant souple et fonctionnant comme un ressort, elle se déforme en s'écrasant du côté de la paroi latérale 12b. Cette déformation absorbe une partie de l'énergie d'impact et permet à l'aube adjacente 3 de pivoter dans son alvéole tel qu'indiqué sur la figure 6. Ainsi, un jeu est libéré au sommet de l'aube adjacente 3, permettant à l'aube cassée de glisser entre le sommet des aubes et le carter (non représenté) entourant le rotor. Une fois que l'aube cassée a glissé entre le sommet de l'aube et le carter, il n'y a plus d'effort 30 qui s'applique sur la cale 7. Celle-ci, grâce à son élasticité et à la précontrainte de montage, revient à une position proche de sa position initiale et permet de recaler l'aube 3 dans son alvéole 2, à une position proche de sa position initiale. La déformation subie par la cale peut être élastique ou plastique. Une rupture localisée de la cale 7, au niveau de la paroi latérale 12b, peut aussi être admise, dans la mesure où la cale 7 est dimensionnée de façon à assurer le retour de l'aube 3 à une position proche de sa position initiale. Le retour de l'aube adjacente 3 à une position proche de sa position initiale permet, d'une part au moteur de pouvoir poursuivre sa rotation en minimisant au mieux l'effet néfaste d'une perte d'aube sur son fonctionnement, et, d'autre part, empêche l'aube 3 de descendre vers le fond de l'alvéole 2 et de sortir de son logement.

## Revendications

1. Dispositif de positionnement d'une aube (3) dans une alvéole (2) d'un disque de rotor (1), comprenant une cale ressort (7) constituée d'une seule et unique pièce élastique de forme profilée creuse comportant une paroi supérieure (10) et une paroi inférieure (11) reliées entre elles par deux parois latérales (12a, 12b), **caractéterisé en ce que** les deux parois latérales (12a, 12b) comportent au moins un usinage (17).

2. Dispositif de positionnement d'une aube (3) selon la revendication 1,
**caractérisé en ce que** la forme profilée de la cale (7) contient un noyau dans sa partie centrale (40).

3. Dispositif de positionnement d'une aube (3) selon l'une des revendications 1 et 2,
**caractérisé en ce que** ladite cale comporte des extrémités amont et aval munies respectivement d'un détrompeur (13) et d'une languette (14).

4. Dispositif de positionnement d'une aube (3) selon l'une des revendications 1 et 3, **caractérisé en ce que** ladite cale est élaborée à partir d'un seul et unique matériau.

5. Dispositif de positionnement d'une aube (3) selon l'une quelconque des revendications 1 à 4,
**caractérisé en ce que** ladite cale est élaborée à partir d'un matériau composite.

6. Dispositif de positionnement d'une aube (3) selon la revendication 5,
**caractérisé en ce que** le matériau composite est constitué de fibres de matériau identique.

7. Dispositif de positionnement d'une aube (3) selon la revendication 5,
**caractérisé en ce que** le matériau composite est constitué de fibres de matériaux différents.

8. Dispositif de positionnement d'une aube (3) selon l'une quelconque des revendications 5 à 7,
**caractérisé en ce que** la cale (7) est élaborée à partir de drapé pré-imprégné.

9. Dispositif de positionnement d'une aube (3) selon l'une quelconque des revendications 5 à 7,
**caractérisé en ce que** la cale (7) est élaborée à partir d'une texture de fibres tissées.

10. Dispositif de positionnement d'une aube (3) selon l'une quelconque des revendications 1 à 4,
**caractérisé en ce que** ladite cale est élaborée à partir d'un matériau métallique.

11. Dispositif de positionnement d'une aube (3) selon le revendication 3,
**caractérisé en ce que** le détrompeur (13) et la languette (14) sont élaborés à partir d'un matériau différent de celui de ladite cale (7).

12. Dispositif de positionnement d'une aube (3) selon le revendication 3,
**caractérisé en ce que** le détrompeur (13) et la languette (14) forment une pièce monobloc avec ladite cale (7).

13. Dispositif de positionnement d'une aube (3) selon le revendication 3,
**caractérisé en ce que** le détrompeur (13) et la languette (14) sont rapportés et fixés sur ladite cale (7).

14. Disque aubagé comportant un disque, au moins une aube dans une alvéole réalisée en périphérie du disque et au moins un dispositif de positionnement de l'aube dans son alvéole selon l'une quelconque des revendications précédentes.

15. Turboréacteur comportant au moins un disque aubagé selon la revendication 14.

## Claims

1. Device for the positioning of a blade (3) in a slot (2) of a rotor disk (1), comprising a spring spacer (7) that consists of a single elastic piece of hollow profiled shape comprising a top wall (10) and a bottom wall (11) connected together by two side walls (12a, 12b), the device being **characterized in that** the two side walls (12a, 12b) include at least one machined feature (17).

2. Device for the positioning of a blade (3) according to claim 1, **characterized in that** the profiled shape of the spacer (7) contains a core in its central part (40).

3. Device for the positioning of a blade (3) according to claim 1 or claim 2, **characterized in that** said spacer comprises upstream and downstream ends furnished respectively with a polarizing key (13) and with a tab (14).

4. Device for the positioning of a blade (3) according to claim 1 or claim 3, **characterized in that** said spacer is produced from a single material.

5. Device for the positioning of a blade (3) according to any one of claims 1 to 4, **characterized in that** said spacer is made from a composite.

6. Device for the positioning of a blade (3) according to claim 5, **characterized in that** the composite consists of fibers of identical material.

7. Device for the positioning of a blade (3) according to claim 5, **characterized in that** the composite consists of fibers of different materials.

8. Device for the positioning of a blade (3) according to any one of claims 5 to 7, **characterized in that** the spacer (7) is made from a prepreg lay-up.

9. Device for the positioning of a blade (3) according to any one of claims 5 to 7, **characterized in that** the spacer (7) is made from a structure of woven fibers.

10. Device for the positioning of a blade (3) according to any one of claims 1 to 4, **characterized in that** said spacer is made from a metal material.

11. Device for the positioning of a blade (3) according to claim 3, **characterized in that** the polarizing key (13) and the tab (14) are made from a material different from that of said spacer (7).

12. Device for the positioning of a blade (3) according to claim 3, **characterized in that** the polarizing key (13) and the tab (14) form a one-part piece with said spacer (7).

13. Device for the positioning of a blade (3) according to claim 3, **characterized in that** the polarizing key (13) and the tab (14) are fitted and attached to said spacer (7).

14. Bladed disk comprising a disk, at least one blade in a slot made on the periphery of the disk and at least one device for the positioning of the blade in its slot according to any preceding claim.

15. Turbojet comprising at least one bladed disk according to claim 14.

## Patentansprüche

1. Vorrichtung zur Positionierung einer Schaufel (3) in einer Vertiefung (2) einer Rotorscheibe (1), umfassend einen Federkeil (7), der von einem einzigen elastischen Teil hohlprofilierter Form gebildet ist, das eine obere Wand (10) und eine untere Wand (11) umfaßt, die durch zwei Seitenwände (12a, 12b) untereinander verbunden sind, **dadurch gekennzeichnet, daß** die beiden Seitenwände (12a, 12b) wenigstens eine bearbeitete Stelle (17) aufweisen.

2. Vorrichtung zur Positionierung einer Schaufel (3) nach Anspruch 1, **dadurch gekennzeichnet, daß** die profilierte Form des Keils (7) in ihrem mittleren Teil (40) einen Kern enthält.

3. Vorrichtung zur Positionierung einer Schaufel (3) nach einem der Ansprüche 1 und 2, **dadurch gekennzeichnet, daß** der Keil ein stromaufwärtiges und ein stromabwärtiges Ende aufweist, die jeweils mit einer Unverwechselbarkeitseinrichtung (13) und mit einer Zunge (14) versehen sind.

4. Vorrichtung zur Positionierung einer Schaufel (3) nach einem der Ansprüche 1 und 3, **dadurch gekennzeichnet, daß** der Keil aus einem einzigen Werkstoff gefertigt ist.

5. Vorrichtung zur Positionierung einer Schaufel (3) nach einem der Ansprüche 1 bis 4, **dadurch gekennzeichnet, daß** der Keil aus einem Verbundwerkstoff gefertigt ist.

6. Vorrichtung zur Positionierung einer Schaufel (3) nach Anspruch 5, **dadurch gekennzeichnet, daß** der Verbundwerkstoff von Fasern aus einem gleichen Werkstoff gebildet ist.

7. Vorrichtung zur Positionierung einer Schaufel (3) nach Anspruch 5, **dadurch gekennzeichnet, daß** der Verbundwerkstoff von Fasern aus unterschiedlichen Werkstoffen gebildet ist.

8. Vorrichtung zur Positionierung einer Schaufel (3) nach einem der Ansprüche 5 bis 7, **dadurch gekennzeichnet, daß** der Keil (7) aus einem vorimprägnierten Gelege gefertigt ist.

9. Vorrichtung zur Positionierung einer Schaufel (3) nach einem der Ansprüche 5 bis 7, **dadurch gekennzeichnet, daß** der Keil (7) aus einer Struktur gewebter Fasern gefertigt ist.

10. Vorrichtung zur Positionierung einer Schaufel (3) nach einem der Ansprüche 1 bis 4, **dadurch gekennzeichnet, daß** der Keil aus einem metallischen Werkstoff gefertigt ist.

11. Vorrichtung zur Positionierung einer Schaufel (3) nach Anspruch 3, **dadurch gekennzeichnet, daß** die Unverwechselbarkeitseinrichtung (13) und die Zunge (14) aus einem anderen Werkstoff als der Keil (7) gefertigt sind.

12. Vorrichtung zur Positionierung einer Schaufel (3) nach Anspruch 3, **dadurch gekennzeichnet, daß** die Unverwechselbarkeitseinrichtung (13) und die Zunge (14) mit dem Keil (7) ein einstückiges Teil bilden.

13. Vorrichtung zur Positionierung einer Schaufel (3) nach Anspruch 3, **dadurch gekennzeichnet, daß** die Unverwechselbarkeitseinrichtung (13) und die Zunge (14) an den Keil (7) angesetzt und an ihm befestigt sind.

14. Beschaufelte Scheibe umfassend wenigstens eine Scheibe, wenigstens eine Schaufel in einer am Umfang der Scheibe ausgebildeten Vertiefung sowie wenigstens eine Vorrichtung zur Positionierung der Schaufel in ihrem Hohlraum nach einem der vorhergehenden Ansprüche.

15. Turbostrahltriebwerk, das wenigstens eine beschaufelte Scheibe nach Anspruch 14 umfaßt.
